# EUROPÄISCHE PATENTANMELDUNG

(11) **EP 2 320 287 A1**
(43) Veröffentlichungstag der Anmeldung: **11.05.2011**
(21) Anmeldenummer: 09175097.6
(22) Anmeldetag: 05.11.2009
(51) Int. Cl.: G05B 19/042, G05B 19/418

(54) **Überwachungssystem und Verfahren zur Überwachung des Zustands einer technischen Anlage**

(71) Anmelder: Siemens Aktiengesellschaft, 80333 München (DE)
(72) Erfinder: Burkhardt, Alexander, 72631, Aichtal (DE); Hackländer, Frank, 70599, Stuttgart (DE); Ordenewitz, Rainer, 70736, Fellbach (DE)

(57) **Zusammenfassung**

Die Erfindung betrifft ein Verfahren zur Überwachung des Zustands einer technischen Anlage, wobei von einem Anwender mittels eines Webbrowsers (11) über das Internet eine Aufforderung zur Anzeige einer Webseite, auf der erste Daten (X1') der Anlage (5) angezeigt werden sollen, an eine Webserversoftware übermittelt wird, wobei die Webserversoftware Zugriff auf die ersten Daten (X1') hat, wobei von der Webserversoftware die ersten Daten (X1') an eine erste Serversoftware (15) übermittelt werden, wobei von der ersten Serversoftware die ersten Daten (X1') in für die Webserversoftware interpretierbare erste Anzeigedaten transformiert werden und die ersten Anzeigedaten an die Webserversoftware übermittelt werden, wobei von der Webserversoftware anhand der ersten Anzeigedaten die Webseite aufbaut wird und an den Webbrowser zur Anzeige der Webseite übermittelt wird. Weiterhin betrifft die Erfindung ein diesbezügliches Überwachungssystem. Die Erfindung ermöglicht eine einfache Integration einer Messeinrichtung in das Überwachungssystem.

## Beschreibung

Die Erfindung betrifft ein Verfahren zur Überwachung des Zustands einer technischen Anlage. Weiterhin betrifft die Erfindung ein diesbezügliches Überwachungssystem.

Überwachungssysteme zur Überwachung des Zustands einer technischen Anlage weisen im Allgemeinen eine Vielzahl von Messeinrichtungen unterschiedlichster Hersteller mit unterschiedlichsten Basistechnologien auf. Solche Überwachungssysteme werden fachspezifisch auch als sogenannte Condition Monitoring Systeme bezeichnet. Die Messeinrichtungen liefern dabei die zur Überwachung des Zustands der technischen Anlage notwendigen Daten, die z.B. in Form von Temperaturen, Drehzahlen und Schwingungen von Komponenten der Anlage vorliegen können. Bei einem Überwachungssystem zur Überwachung des Zustands der technischen Anlage ist es deshalb wichtig, dem Anwender, der den Zustand der technischen Anlage überwachen soll, eine einheitliche integrierte Bedienführung und Bedienansicht über die gesamten Messeinrichtungen und den von ihnen gelieferten Daten anzubieten. Eine wesentliche Problematik ist hierbei eine einheitliche Darstellung und Handhabung von Messergebnissen, die von Messeinrichtungen unterschiedlichster Hersteller geliefert werden.

Bisher wurde eine homogene Bedienführung und Anzeige über die normalerweise vorhandene heterogene Systemlandschaft bei Überwachungssystemen zur Überwachung des Zustands einer technischen Anlage nur projektspezifisch durch Erstellen von, für die jeweilige Anlage, spezialisierter Integrationssoftware ermöglicht.

Es ist Aufgabe der Erfindung, bei einem Überwachungssystem zur Überwachung des Zustands einer technischen Anlage, eine einfache Integration einer Messeinrichtung in das Überwachungssystem zu ermöglichen.

Diese Aufgabe wird gelöst durch ein Verfahren zur Überwachung des Zustands einer technischen Anlage, wobei von einem Anwender mittels eines Webbrowsers über das Internet eine Aufforderung zur Anzeige einer Webseite, auf der erste Daten der Anlage angezeigt werden sollen, an eine Webserversoftware übermittelt wird, wobei die Webserversoftware Zugriff auf die ersten Daten hat, wobei von der Webserversoftware die ersten Daten an eine erste Serversoftware übermittelt werden, wobei von der ersten Serversoftware die ersten Daten in für die Webserversoftware interpretierbare erste Anzeigedaten transformiert werden und die ersten Anzeigedaten an die Webserversoftware übermittelt werden, wobei von der Webserversoftware anhand der ersten Anzeigedaten die Webseite aufbaut wird und an den Webbrowser zur Anzeige der Webseite übermittelt wird.

Weiterhin wird diese Aufgabe gelöst durch ein Überwachungssystem zur Überwachung des Zustands einer technischen Anlage, wobei das Überwachungssystem eine Recheneinrichtung aufweist, wobei auf der Recheneinrichtung eine Webserversoftware abläuft und erste Daten der technischen Anlage gespeichert sind, wobei an die Webserversoftware von einem Anwender mittels eines Webbrowsers über das Internet eine Aufforderung zur Anzeige einer Webseite, auf der erste Daten der Anlage angezeigt werden sollen, übermittelbar sind, wobei die Webserversoftware Zugriff auf die ersten Daten hat, wobei von der Webserversoftware die ersten Daten an eine erste Serversoftware übermittelbar sind, wobei von der ersten Serversoftware die Daten in für die Webserversoftware interpretierbare erste Anzeigedaten transformierbar und die ersten Anzeigedaten an die Webserversoftware übermittelbar sind, wobei von der Webserversoftware anhand der ersten und der zweiten Anzeigedaten die Webseite aufbaut wird und an den Webbrowser zur Anzeige der Webseite übermittelt wird.

Weiterhin ermöglicht die Erfindung eine einheitliche Anzeige von Daten bei einem Überwachungssystem zur Überwachung des Zustands einer technischen Anlage.

Vorteilhafte Ausbildungen der Erfindung ergeben sich aus den abhängigen Ansprüchen. Vorteilhafte Ausbildungen des Verfahrens ergeben sich analog zu vorteilhaften Ausbildungen des Überwachungssystems und umgekehrt.

Es erweist sich als vorteilhaft, wenn von einem Anwender mittels eines Webbrowsers über das Internet eine Aufforderung zur Anzeige einer Webseite, auf der erste und zweite Daten der Anlage angezeigt werden sollen, an eine Webserversoftware übermittelt wird, wobei die Webserversoftware Zugriff auf die ersten und die zweiten Daten hat, wobei von der Webserversoftware die ersten Daten an eine erste Serversoftware übermittelt werden, wobei von der ersten Serversoftware die ersten Daten in für die Webserversoftware interpretierbare erste Anzeigedaten transformiert werden und die ersten Anzeigedaten an die Webserversoftware übermittelt werden, wobei von der Webserversoftware die zweiten Daten an eine zweite Serversoftware übermittelt werden, wobei von der zweiten Serversoftware die zweiten Daten in für die Webserversoftware interpretierbare zweite Anzeigedaten transformiert werden und die zweiten Anzeigedaten an die Webserversoftware übermittelt werden, wobei die Webserversoftware anhand der ersten und der zweiten Anzeigedaten die Webseite aufbaut und an den Webbrowser zur Anzeige der Webseite übermittelt. Hierdurch wird eine einfache Integration der Daten zur Realisierung einer Gesamtanzeige der Daten, welche von Messeinrichtungen unterschiedlicher Hersteller erzeugt werden, auf einer Webseite ermöglicht.

Ferner erweist es sich als vorteilhaft, wenn die Übermittelung der Daten an die Serversoftware und die Übermittelung der Anzeigedaten von der Serversoftware an die Webserversoftware über das Internet erfolgt. Hierdurch wird es ermöglicht, die erste und falls vorhanden die zweite Serversoftware auf örtlich und von der Recheneinrichtung weit entfernten Recheneinheiten ablaufen zu lassen, so dass z.B. die Recheneinrichtung bei einem Dienstleister lokalisiert sein kann und die jeweilige Serversoftware auf einer Recheneinheit ablaufen kann, die beim Hersteller der Messeinrichtung von der die jeweiligen Daten erzeugt werden, lokalisiert sein kann.

Weiterhin erweist es sich als vorteilhaft, wenn die Daten von der Webserversoftware an die Serversoftware in Form eines XML-Codes übermittelt werden, da ein XML-Code (Extensible Markup Language) einen bei Internetanwendungen weit verbreiteten Code darstellt.

Ferner erweist es sich als vorteilhaft, wenn die Anzeigedaten in Form von HTML-Code vorliegen, da ein HTML-Code (Hypertext Markup Language) ein bei Internetanwendungen weit verbreiteten Code darstellt.

Ferner erweist es sich als vorteilhaft, wenn die Webserversoftware anhand der Anzeigdaten die Webseite aufbaut und in Form von HTML-Code an den Webbrowser zur Anzeige der Webseite übermittelt, da ein HTML-Code (Hypertext Markup Language) einen bei Internetanwendungen weit verbreiteter Code darstellt.

Ferner erweist es sich als vorteilhaft, wenn die technische Anlage eine einzelne oder mehrere Messeinrichtungen aufweist, die die Daten erzeugen, wobei von der Anlage die Daten über das Internet an eine Recheneinrichtung auf der die Webserversoftware abläuft übermittelt werden und in der Recheneinrichtung gespeichert werden. Vorzugweise ist die Anlage dabei über einen Client, d.h. einem Rechner auf dem eine Clientsoftware abläuft mit dem Internet verbunden. Über den Client können die Daten auf besonders einfache Art und Weise von der Anlage über das Internet an die Recheneinrichtung übermittelt werden.

Weiterhin erweist es sich als vorteilhaft, wenn die erste Serversoftware auf einer ersten Recheneinheit abläuft, wobei die erste Recheneinheit über das Internet mit der Recheneinrichtung verbunden ist. Hierdurch wird es ermöglicht, die erste Serversoftware auf einer von der Recheneinrichtung örtlich weit entfernten Recheneinheit ablaufen zu lassen, so dass z.B. die Recheneinrichtung bei einem Dienstleister lokalisiert sein kann und die jeweilige Serversoftware auf einer Recheneinheit ablaufen kann, die beim Hersteller der Messeinrichtung von der die Daten erzeugt werden, lokalisiert sein kann.

Weiterhin erweist es sich als vorteilhaft, wenn die erste Serversoftware auf der Recheneinrichtung abläuft, da dann das Überwachungssystem mit einem minimalen Aufwand an Hardware realisiert werden kann.

Ein Ausführungsbeispiel der Erfindung ist in der Zeichnung dargestellt und wird im Folgenden näher erläutert. Dabei zeigen:
- FIG 1: ein erfindungsgemäßes Überwachungssystem in Form einer blockförmigen Darstellung, und
- FIG 2: ein Ablaufdiagramm des erfindungsgemäßen Verfah- rens.

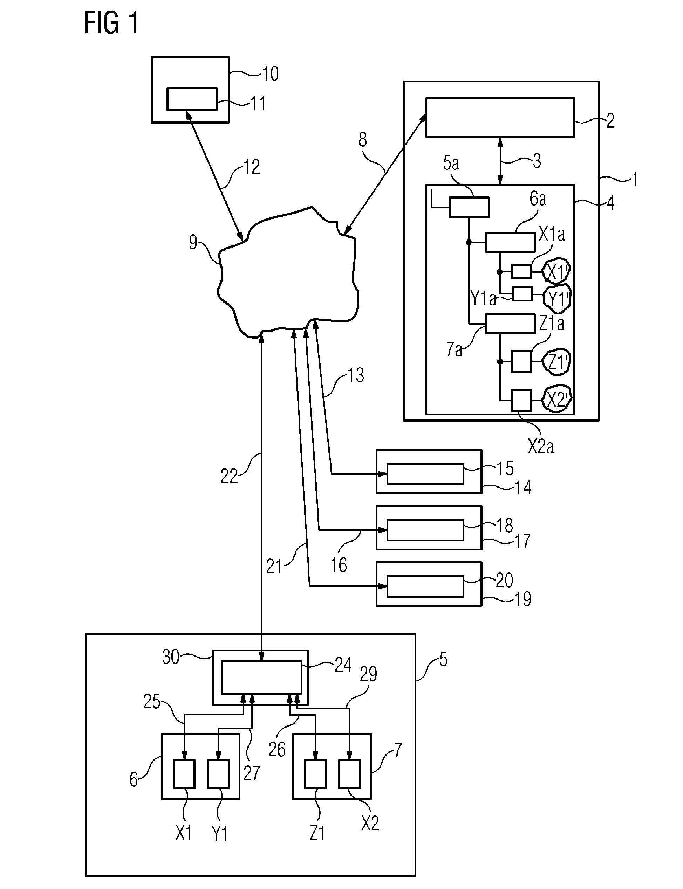

In FIG 1 ist in Form einer schematisierten blockförmigen Darstellung ein erfindungsgemäßes Überwachungssystem zur Überwachung des Zustands einer technischen Anlage 5 dargestellt, wobei fachspezifisch ein solches Überwachungssystem auch als Condition Monitoring System bezeichnet wird.

Im Rahmen des Ausführungsbeispiels ist dabei die technische Anlage 5 in Form eines Windkraftrads ausgebildet, wobei die technische Anlage 5 aber auch eine Vielzahl von Windkrafträdern umfassen kann. Selbstverständlich kann die technische Anlage 5 aber auch technische Anlagen aus ganz anderen technischen Gebieten, wie z.B. eine einzelne oder mehrere Zementmühlen, umfassen.

Die technische Anlage 5 weist dabei Rahmen des Ausführungsbeispiels ein erstes Teilsystem 6 und ein zweites Teilsystem 7 auf. Das erste Teilsystem 6 liegt dabei Rahmen des Ausführungsbeispiels in Form eines Getriebes vor, das die Drehzahl des Windkraftrads auf die für den Generator des Windkraftrads notwendige Drehzahl anpasst, während das zweite Teilsystem 7 im Rahmen des Ausführungsbeispiels in Form des Generators vorliegt. Das erste Teilsystem 6 weist zur Überwachung seines Zustands eine von einem Hersteller X gelieferte Messeinrichtung X1 und eine von einem Hersteller Y gelieferte Messeinrichtung Y1 auf. Das Teilsystem 7 weist zur Überwachung seines Zustands eine von einem Hersteller Z gelieferte Messeinrichtung Z1 und eine von dem Hersteller X gelieferte Messeinrichtung X2 auf. Die Messeinrichtung X1 erzeugt dabei erste Daten X1', die Rahmen des Ausführungsbeispiels in Form von Drehzahlwerten des windradseitigen Teils des Getriebes vorliegen. Das Messsystem Y1 erzeugt zweite Daten Y1', die Rahmen des Ausführungsbeispiels in Form von Schwingungswerten des Teilsystems 6 vorliegen. Das Messsystem Z1 erzeugt dritte Daten Z1', die Rahmen des Ausführungsbeispiels in Form von Leistungswerten des Generators vorliegen und die Messeinrichtung X2 erzeugt vierte Daten X2', die Rahmen des Ausführungsbeispiels in Form von Temperaturwerten des Generators vorliegen. Die Messsysteme übermitteln die von ihnen erzeugten Daten über Verbindungen 25, 26, 27 und 29 an einen Rechner 30, auf dem eine Clientsoftware 24 abläuft, mit der eine Anbindung des Rechners 30 an das Internet 9 zur Übermittelung von Daten realisiert ist. Der Rechner 30 ist solchermaßen als ein sogenannter Client ausgebildet. Der Rechner 30 ist zur Übertragung der Daten mit dem Internet 9 verbunden, was durch einen Pfeil 22 dargestellt ist.

Weiterhin weist das Überwachungssystem eine Recheneinrichtung 1 auf, die im einfachsten Fall hardwaremäßig aus einem Einzelrechner bestehen kann. Die Recheneinrichtung 1 kann dabei im einfachsten Fall nur einen Zentralprozessor aufweisen, oder aber als Multiprozessorsystem realisiert sein. Weiterhin kann die Recheneinrichtung 1 aber z.B. auch aus mehreren Einzelrechnen bestehen, die über z.B. eine LAN-Anbindung miteinander vernetzt sind.

Auf der Recheneinrichtung 1 läuft eine Webserversoftware 2 ab, d.h. die Recheneinrichtung 1 führt die Webserversoftware 2 aus. Die Recheneinrichtung 1 stellt zusammengenommen mit der auf der Recheneinrichtung 1 ablaufenden Webserversoftware 2 einen so genannten Webserver dar, der insbesondere Daten von Clients empfangen kann und Daten an Clients senden kann und insbesondere eine Webseite aufbauen kann und zur Anzeige an einen Webbrowser übermitteln kann. Weiterhin weist die Recheneinrichtung 1 zur Speicherung der von den Messeinrichtungen der technischen Anlage 5 an die Webserversoftware 2 übermittelten Daten vorzugsweise eine Datenbank 4 auf, die Rahmen des Ausführungsbeispiels mittels einer auf der Recheneinrichtung 1 ablaufenden Datenbanksoftware realisiert ist. Die Webserversoftware 2 kann Daten an die Datenbank 4 übermitteln und von der Datenbank 4 Daten erhalten, was in FIG 1 durch einen Pfeil 3 dargestellt ist. Die Webserversoftware 2 hat solchermaßen Zugriff auf die in der Datenbank 4 gespeicherten Daten. Es sein an dieser Stelle angemerkt, dass die Daten aber auch nicht unbedingt innerhalb einer Datenbank in der Recheneinrichtung 1 gespeichert sein müssen, sondern ganz allgemein irgendwo in der Recheneinrichtung 1 abgespeichert sein können und die Webserversoftware 2 Zugriff auf die Daten hat.

In der Datenbank 4 sind die ersten Daten X1', die zweiten Daten Y1', die dritten Daten Z1' und die vierten Daten X2' abgespeichert. Im Rahmen einer vorteilhaften Ausbildung der Erfindung enthält dabei die Datenbank 4, wie in FIG 1 dargestellt, ein grafisches Abbild der technischen Anlage 5 in Form einer Baumstruktur. Die Anlage 5 ist dabei in Form des Symbols 5a dargestellt. Das Teilsystem 6 ist in Form des Symbols 6a und das Teilsystem 7 in Form des Symbols 7a dargestellt. Die Messeinrichtung X1 ist in Form des Symbols X1a, die Messeinrichtung Y1 in Form des Symbols Y1a, die Messeinrichtung Z1 in Form des Symbols Z1a und die Messeinrichtung X2 in Form des Symbols X2a dargestellt. Den entsprechenden Symbolen X1a, Y1a, Z1a und X2a der Messeinrichtungen sind dann die jeweiligen ersten Daten X1', die zweiten Daten Y1', die dritten Daten Z1' und die vierten Daten X2' zugeordnet. Die ersten, zweiten, dritten und vierten Daten werden dabei z.B. in Form eines sogenannten softwaretechnischen Binärcodes abgespeichert, d.h. z.B. in Form einer rudimentären Aneinanderreihung von Nullen und Einsen. Der Inhalt der Daten, d.h. im Rahmen des Ausführungsbeispiels, der Inhalt der ersten, zweiten, dritten und vierten Daten sind von der Webserversoftware 2 nicht interpretierbar, d.h. die Webserversoftware 2 weis z.B. nicht ob es sich bei den Daten um eine Drehzahl, eine Temperatur oder eine Schwingung oder eine Leistung handelt und wie die Daten strukturiert sind oder was die Daten bedeuten. Weiterhin ist der Inhalt der Daten auch nicht von der Datenbank 4 interpretierbar.

Weiterhin umfasst das Überwachungssystem eine erste Serversoftware 15, die auf einer Recheneinheit 14 abläuft, eine zweite Serversoftware 18, die auf einer Recheneinheit 17 abläuft und eine dritte Serversoftware 20, die auf einer Recheneinheit 19 abläuft. Die Recheneinheiten 14, 17 und 19 und insbesondere die jeweilige den Recheneinheiten zugeordnete Serversoftware 15, 18 und 20, sind zur Übermittlung von Daten mit dem Internet 9 verbunden, was durch Pfeile 13, 16 und 21 in FIG 1 dargestellt ist. Die Recheneinheit 14 wird dabei im Rahmen des Ausführungsbeispiels von dem Hersteller X der Messeinrichtungen X1 und X2 betrieben und ist bei diesem lokalisiert. Die Recheneinheit 17 wird Rahmen des Ausführungsbeispiels vom Hersteller Y der Messeinrichtung Y1 betrieben und ist bei diesem lokalisiert. Die Recheneinheit 19 wird vom Hersteller Z der Messeinrichtung Z1 betrieben und ist beim Hersteller Z lokalisiert. Die Recheneinheiten können dabei im einfachsten Fall jeweils nur einen Zentralprozessor aufweisen, oder aber als Multiprozessorsystem realisiert sein. Weiterhin können die Recheneinheiten aber z.B. auch aus mehreren Einzelrechnen bestehen, die über z.B. eine LAN-Anbindung miteinander vernetzt sind.

Die erste Serversoftware 15 weiß dabei, wie die ersten Daten X1' und die vierten Daten X2' zu interpretieren sind und transformiert die ersten Daten X1' in von der Webserversoftware 2 interpretierbare erste Anzeigedaten und die vierten Daten X2' in für die Webserversoftware 2 interpretierbare vierte Anzeigedaten. Die zweite Serversoftware 18 weiß, wie die zweiten Daten Y1' zu interpretieren sind und transformiert die zweiten Daten Y1' in von der Webserversoftware 2 interpretierbare zweite Anzeigedaten. Die dritte Serversoftware 20 weiß, wie die dritten Daten Z1' zu interpretieren sind und transformiert die dritten Daten Z1' in von der Webserversoftware 2 interpretierbare dritte Anzeigedaten.

Ein Anwender, der den Zustand der technischen Anlage 5 überwacht, kann über einen bei ihm lokalisierten Rechner 10, der z.B. in Form eines Personal Computers vorliegen kann, die technische Anlage 5 überwachen. Der Rechner 10 weist einen auf ihm ablaufenden Webbrowser 11 auf. Der Rechner 10 und insbesondere der Webbrowser 11 ist dabei zum Übermitteln von Daten mit dem Internet 9 verbunden, was durch einen Pfeil 12 in FIG 1 dargestellt ist. Durch Aufruf von Webseiten, die von der Webserversoftware 2 aufgebaut werden, kann er den Zustand der technischen Anlage 5 überwachen und das Überwachungssystem bedienen.

Es sei an dieser Stelle angemerkt, dass, die erste, zweite und/oder dritte Serversoftware 15, 18, und 20 alternativ aber auch auf der Recheneinrichtung 1 ablaufen können und z.B. dem Betreiber der Recheneinrichtung 1 von den Herstellern der Messeinrichtungen der technischen Anlage 5 zur Verfügung gestellt werden.

Selbstverständlich sind aber auch Mischformen denkbar, in denen z.B. die erste Serversoftware 15 auf der beim Hersteller X angeordneten Recheneinheit 14 abläuft und die zweite Serversoftware 18 auf der Recheneinrichtung 1 abläuft und solchermaßen in die Recheneinrichtung 1 integriert ist.

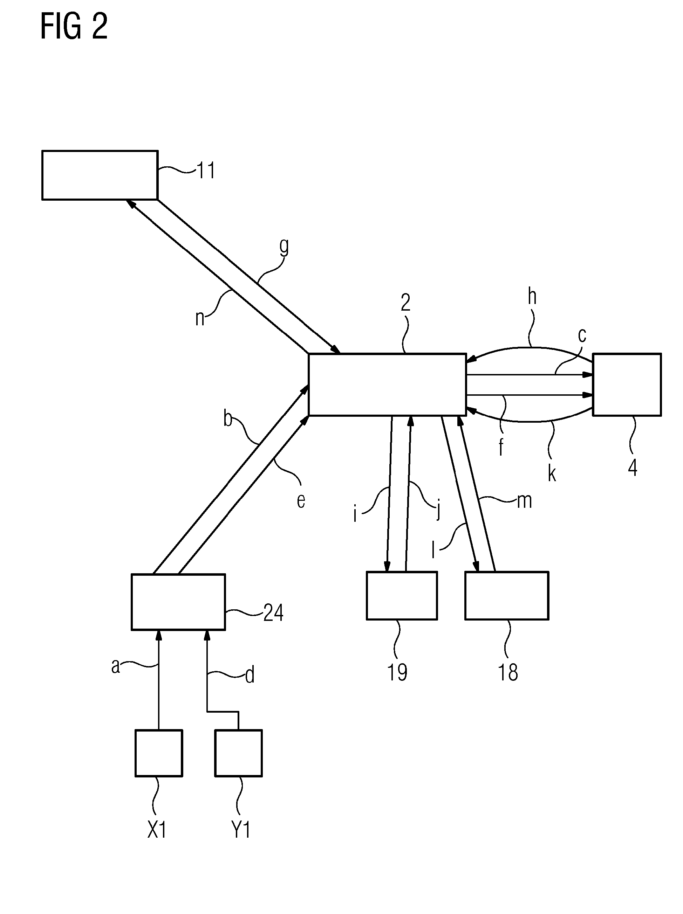

In FIG 2 ist in Form einer schematisierten blockförmigen Darstellung der Ablauf des erfindungsgemäßen Verfahrens anhand der Messeinrichtung X1 und den von ihr erzeugten ersten Daten X1' und anhand der Messeinrichtung Y1 und der von ihr erzeugten zweiten Daten Y1' dargestellt. Gleiche Elemente sind dabei in FIG 2 mit den gleichen Bezugszeichen versehen wie in FIG 1. Für die Messeinrichtung Z1 und die von ihr erzeugten Daten Z1' und für die Messeinrichtung X2 und die von ihr erzeugten Daten X2' läuft das erfindungsgemäße Verfahren in analoger Weise ab.

Die Messeinrichtung X1 des Herstellers X erzeugt die ersten Daten X1' und übermittelt diese in einem Schritt a an die Clientsoftware 24, welche auf dem Rechner 30 (siehe FIG 1) abläuft. Es sei dabei angemerkt, dass die Clientsoftware auch auf der jeweiligen Messeinrichtung ablaufen kann und somit Bestandteil der jeweiligen Messeinrichtung sein kann. Der Rechner 30 kann dann entfallen. In einem Schritt b werden anschließend die ersten Daten X1' von der Clientsoftware 24 über das Internet 9 an die Webserversoftware 2 übermittelt und in einem Schritt c in der Datenbank 4 gespeichert.

Die Messeinrichtung Y1 des Herstellers Y erzeugt die zweiten Daten Y1' und übermittelt diese in einem Schritt d an die Clientsoftware 24. In einem Schritt e werden anschließend die zweiten Daten Y1' von der Clientsoftware 24 über das Internet 9 an die Webserversoftware 2 übermittelt und in einem Schritt f in der Datenbank 4 gespeichert.

Die Schritte a, b, c, d, e und f werden vorzugsweise kontinuierlich oder in bestimmten Zeitabständen durchgeführt, so dass in der Datenbank 4 im Allgemeinen immer aktuelle Daten von den Messeinrichtungen der technischen Anlage 5 abgespeichert sind.

In einem Schritt g wird von einem Anwender mittels des Webbrowsers 11 über das Internet 9 eine Aufforderung zur Anzeige einer Webseite, auf der die ersten Daten X1' und die zweiten Daten Y1' der Anlage 5 am Rechner 10 angezeigt werden sollen, an die Webserversoftware 2 übermittelt. In dem genannten Ausführungsbeispiel gemäß FIG 2 erfolgt somit eine Aufforderung zur Anzeige der Daten des ersten Teilsystems 6 der Anlage 5 (siehe FIG 1).

Die Webserversoftware 2 hat Zugriff auf die in der Datenbank 4 gespeicherten ersten Daten X1'und zweiten Daten Y1'.

Die ersten Daten X1' werden anschießend in einem Schritt h von der Datenbank 4 an die Webserversoftware 2 übermittelt. In einem nachfolgenden Schritt i werden die ersten Daten X1' an die erste Serversoftware 15 übermittelt. Die ersten Daten X1' werden dabei von der Webserversoftware 2 an die erste Serversoftware 15, vorzugsweise in Form eines XML-Codes (Extensible Markup Language) übermittelt. Von der ersten Serversoftware 15 werden die ersten Daten X1' in für die Webserversoftware 2 interpretierbare erste Anzeigendaten transformiert. Die erste Serversoftware 15, welche vorzugsweise z.B. vom Hersteller X der Messeinrichtung X1 erstellt ist, weiß wie die ersten Daten X1' zu interpretieren sind, d.h. dass es sich z.B. bei den ersten Daten X1' um Drehzahlwerte handelt und/oder dass die Einheit der ersten Daten 1/sec. beträgt. Weiterhin kennt die Serversoftware 15 z.B. ein eventuell verwendetes spezifisches Datenformat, in dem die Messeinrichtung X1 die ersten Daten X1'erzeugt und an die Clientsoftware 24 übermittelt hat. Unter Zuhilfenahme dieser Kenntnisse, d.h. wie die ersten Daten X1' zu interpretieren sind, transformiert die erste Serversoftware 15 die ersten Daten X1' in für die Webserversoftware 2 interpretierbare erste Anzeigedaten, indem sie im Rahmen des Ausführungsbeispiels die ersten Daten X1' in einen HTML-Code (Hypertext Markup Language) transformiert. Anschließend werden in einem Schritt j die Anzeigedaten von der ersten Serversoftware 15 an die Webserversoftware 2 übermittelt. Die ersten Anzeigendaten liegen dabei vorzugsweise wie schon gesagt in einem HTML-Code vor und werden als HTML-Code von der Serversoftware 15 an die Webserversoftware 2 übermittelt. Der HTML-Code kann dabei als Datenpaket in einem, im Rahmen eines zur Übermittlung von der ersten Serversoftware 15 zu der Webserversoftware 2, verwendeten XML-Codes integriert sein.

Die zweiten Daten Y1' werden anschießend in einem Schritt k von der Datenbank 4 an die Webserversoftware 2 übermittelt. In einem nachfolgenden Schritt 1 werden die zweiten Daten Y1' an die zweite Serversoftware 18 übermittelt. Die zweiten Daten Y1' werden dabei von der Webserversoftware 2 an die zweite Serversoftware 18, vorzugsweise in Form eines XML-Codes übermittelt. Von der zweiten Serversoftware 15 werden die zweiten Daten Y1' in für die Webserversoftware 2 interpretierbare zweite Anzeigendaten transformiert. Die zweite Serversoftware 18, welche vorzugsweise z.B. vom Hersteller Y der Messeinrichtung Y1 erstellt ist, weiß wie die zweiten Daten Y1' zu interpretieren sind, d.h. dass es sich z.B. bei den zweiten Daten Y1' um Schwingungswerte handelt und/oder dass die Einheit der zweiten Daten 1/sec. beträgt. Weiterhin kennt die Serversoftware 15 z.B. ein eventuell verwendetes spezifisches Datenformat, in dem die Messeinrichtung Y1 die zweiten Daten Y1'erzeugt und an die Clientsoftware 24 übermittelt hat. Unter Zuhilfenahme dieser Kenntnisse, d.h. wie die zweiten Daten Y1' zu interpretieren sind, transformiert die zweite Serversoftware 18 die zweiten Daten Y1' in für die Webserversoftware 2 interpretierbare zweite Anzeigedaten, indem sie im Rahmen des Ausführungsbeispiels die zweiten Daten Y1' in einen HTML-Code (Hypertext Markup Language) transformiert. Anschließend werden in einem Schritt m die Anzeigedaten von der zweiten Serversoftware 15 an die Webserversoftware 2 übermittelt. Die zweiten Anzeigendaten liegen dabei vorzugsweise wie schon gesagt in einem HTML-Code vor und werden als HTML-Code von der Serversoftware 18 an die Webserversoftware 2 übermittelt. Der HTML-Code kann dabei als Datenpaket in einem, im Rahmen eines zur Übermittlung von der zweiten Serversoftware 18 zu der Webserversoftware 2, verwendeten XML-Codes integriert sein.

Die Webserversoftware 2 baut anschließend anhand der ersten und der zweiten Anzeigedaten die vom Anwender angeforderte Webseite auf und übermittelt diese an den Webbrowser 11 in einem Schritt G zur Anzeige der Webseite an den Rechner 10. Die Webseite kann dabei auch neben der reinen Anzeige der Anzeigedaten virtuelle Bedienelemente enthalten, mit denen der Anwender z.B. mittels eines entsprechenden Maus-Klicks auf das am Bildschirm des Rechners 10 angezeigte entsprechende Bedienelement das Überwachungssystem bedienen kann. Die Webseite ist solchermaßen vorzugsweise Bestandteil einer Bedienoberfläche, auf der die von den Messeinrichtungen der Anlage 5 gelieferten Daten dargestellt werden und auch gegebenenfalls das Überwachungssystem bedient werden kann.

Selbstverständlich können dabei auch mehrere Rechner 10 mit entsprechenden Webbrowsern 11 vorhanden sein und somit mehrere Anwender, die die technische Anlage 5 überwachen sollen, auf die Daten der Messeinrichtungen der technischen Anlage 5 zugreifen und sich diese anzeigen lassen. Selbstverständlich können dabei aber auch nur dem Anwender die Daten von einer einzelnen Messeinrichtung angezeigt werden.

Selbstverständlich kann die technische Anlage 5 z.B. auch mehrere Windkrafträder, oder einen einzelnen oder mehrere Windkrafträderparks, welche jeweils mehrere Windkrafträder aufweisen, umfassen.

Es sei weiterhin angemerkt, dass im Rahmen der Erfindung der Begriff Messeinrichtung in einem weiteren Sinne zu verstehen ist. Im Rahmen des Ausführungsbeispiels lagen die ersten, zweiten, dritten und vierten Daten in Form von Messdaten, wie z.B. einer gemessenen Drehzahl vor. Dies muss nicht unbedingt so sein. Die ersten, zweiten, dritten oder vierten Daten können dabei auch z.B. in Form von innerhalb der Messeinrichtung verarbeiteten Daten vorliegen. So kann z.B. innerhalb der Messeinrichtung ein Mittelwert aus den gemessenen Daten berechnet werden und nur der Mittelwert, z.B. als erste Daten, an die Clientsoftware 24 übermittelt werden. Weiterhin können die Messeinrichtungen auch zur Messung mehrerer verschiedener Messgrößen (z.B. Temperatur und Leistung) ausgebildet sein.

Weiterhin können z.B. die ersten, zweiten, dritten und/oder vierten Daten in Form einer aus einer einzelnen oder mehreren gemessenen Messdaten (z.B. Drehzahl, Schwingung, Temperatur, Leistung etc.) abgeleitet sein und nur oder zusätzlich zu den Messdaten als Daten an die Clientsoftware 24 übertragen werden und auf dem Rechner 10 entsprechend dem erfindungsgemäßen Verfahren angezeigt werden.

Durch die Erfindung können leicht die Messeinrichtungen unterschiedlicher Hersteller in ein Überwachungssystem integriert werden und die von ihnen jeweilig erzeugten Daten für den Anwender angezeigt werden. Weiterhin können auch schon bei einer bestehenden technischen Anlage auf einfache Art und Weise später nachgerüstete Messeinrichtungen in das Überwachungssystem integriert werden, wobei insbesondere die Recheneinrichtung 1 und die auf ihm ablaufende Webserversoftware 2 und die Datenbanksoftware nicht oder nur sehr geringfügig angepasst werden müssen.

## Patentansprüche

1. Verfahren zur Überwachung des Zustands einer technischen Anlage (5), wobei von einem Anwender mittels eines Webbrowsers (11) über das Internet (9) eine Aufforderung zur Anzeige einer Webseite, auf der erste Daten (X1') der Anlage (5) angezeigt werden sollen, an eine Webserversoftware (2) übermittelt wird, wobei die Webserversoftware (2) Zugriff auf die ersten Daten (X1') hat, wobei von der Webserversoftware (2) die ersten Daten (X1') an eine erste Serversoftware (15) übermittelt werden, wobei von der ersten Serversoftware (15) die ersten Daten (X1') in für die Webserversoftware (2) interpretierbare erste Anzeigedaten transformiert werden und die ersten Anzeigedaten an die Webserversoftware (2) übermittelt werden, wobei von der Webserversoftware (2) anhand der ersten Anzeigedaten die Webseite aufbaut wird und an den Webbrowser (11) zur Anzeige der Webseite übermittelt wird.

2. Verfahren nach Anspruch 1,
**dadurch gekennzeichnet, dass** von einem Anwender mittels eines Webbrowsers (11) über das Internet (9) eine Aufforderung zur Anzeige einer Webseite, auf der erste und zweite Daten (X1',Y1') der Anlage (5) angezeigt werden sollen, an eine Webserversoftware (2) übermittelt wird, wobei die Webserversoftware (2) Zugriff auf die ersten und die zweiten Daten (X1',Y1') hat, wobei von der Webserversoftware (2) die ersten Daten (X1') an eine erste Serversoftware (15) übermittelt werden, wobei von der ersten Serversoftware (15) die ersten Daten (X1') in für die Webserversoftware (2) interpretierbare erste Anzeigedaten transformiert werden und die ersten Anzeigedaten an die Webserversoftware (2) übermittelt werden, wobei von der Webserversoftware (2) die zweiten Daten (Y1') an eine zweite Serversoftware (18) übermittelt werden, wobei von der zweiten Serversoftware (18) die zweiten Daten (Y1') in für die Webserversoftware(2) interpretierbare zweite Anzeigedaten transformiert werden und die zweiten Anzeigedaten an die Webserversoftware(2) übermittelt werden, wobei von der Webserversoftware (2) anhand der ersten und der zweiten Anzeigedaten die Webseite aufbaut wird und an den Webbrowser (11) zur Anzeige der Webseite übermittelt wird.

3. Verfahren nach einem der vorhergehenden Ansprüche,
**dadurch gekennzeichnet, dass** die Übermittelung der Daten (X1',Y1') an die Serversoftware (15,18,20) und die Übermittlung der Anzeigedaten von der Serversoftware (15,18,20) an die Webserversoftware(2) über das Internet (9) erfolgt.

4. Verfahren nach einem der vorhergehenden Ansprüche,
**dadurch gekennzeichnet, dass** die Daten (X1',Y1') von der Webserversoftware (2) an die Serversoftware (15,18,20) in Form eines XML-Codes übermittelt werden.

5. Verfahren nach einem der vorhergehenden Ansprüche,
**dadurch gekennzeichnet, dass** die Anzeigedaten in Form von HTML-Code vorliegen.

6. Verfahren nach einem der vorhergehenden Ansprüche,
**dadurch gekennzeichnet, dass** die Webserversoftware(2) anhand der Anzeigedaten die Webseite aufbaut und in Form von HTML-Code an den Webbrowser (11) zur Anzeige der Webseite übermittelt.

7. Verfahren nach einem der vorhergehenden Ansprüche,
**dadurch gekennzeichnet, dass** die technische Anlage (5) eine einzelne oder mehrere Messeinrichtungen (X1a,Y1a) aufweist, die die Daten (X1',Y1') erzeugen, wobei von der Anlage die Daten (X1',Y1') über das Internet (9) an eine Recheneinrichtung (1) auf der die Webserversoftware (2) abläuft übermittelt werden und in der Recheneinrichtung (1) gespeichert werden.

8. Verfahren nach einem der vorhergehenden Ansprüche,
**dadurch gekennzeichnet, dass** die technische Anlage (5) als Windkraftanlage ausgebildet ist.

9. Überwachungssystem zur Überwachung des Zustands einer technischen Anlage (5), wobei das Überwachungssystem eine Recheneinrichtung (1) aufweist, wobei auf der Recheneinrichtung (1) eine Webserversoftware (2) abläuft und erste Daten (X1') der technischen Anlage (5) gespeichert sind, wobei an die Webserversoftware (2) von einem Anwender mittels eines Webbrowsers (11) über das Internet (9) eine Aufforderung zur Anzeige einer Webseite, auf der erste Daten (X1') der Anlage (5) angezeigt werden sollen, übermittelbar sind, wobei die Webserversoftware (2) Zugriff auf die ersten Daten (X1') hat, wobei von der Webserversoftware (2) die ersten Daten (X1') an eine erste Serversoftware (15) übermittelbar sind, wobei von der ersten Serversoftware (15) die Daten (X1') in für die Webserversoftware (2) interpretierbare erste Anzeigedaten transformierbar und die ersten Anzeigedaten an die Webserversoftware (2) übermittelbar sind, wobei die Webserversoftware (2) anhand der ersten Anzeigedaten die Webseite aufbaut und an den Webbrowser (11) zur Anzeige der Webseite übermittelt.

10. Überwachungssystem nach Anspruch 9,
**dadurch gekennzeichnet, dass** die erste Serversoftware (15) auf einer ersten Recheneinheit (14,17,19) abläuft, wobei die erste Recheneinheit (14,17,19) über das Internet (9) mit der Recheneinrichtung (1) verbunden ist.

11. Überwachungssystem nach Anspruch 9,
**dadurch gekennzeichnet, dass** die erste Serversoftware (15) auf der Recheneinrichtung (1) abläuft.
